(19) **Europäisches Patentamt**
**European Patent Office**
**Office européen des brevets**

(11) **EP 1 683 361 B1**

(12) **EUROPEAN PATENT SPECIFICATION**

(45) Date of publication and mention
of the grant of the patent:
**18.07.2007 Bulletin 2007/29**

(51) Int Cl.:
**H04N 7/26** (2006.01)

(21) Application number: **04769702.4**

(86) International application number:
**PCT/IB2004/003469**

(22) Date of filing: **20.10.2004**

(87) International publication number:
**WO 2005/041585 (06.05.2005 Gazette 2005/18)**

(54) **POWER OPTIMIZED COLLOCATED MOTION ESTIMATION METHOD**

LEISTUNGSOPTIMIERTES COLOKALISIERTES BEWEGUNGSCHÄTZVERFAHREN

PROCEDE D'ESTIMATION DE MOUVEMENT CO-SITUE A PUISSANCE OPTIMISEE

(84) Designated Contracting States:
**AT BE BG CH CY CZ DE DK EE ES FI FR GB GR HU IE IT LI LU MC NL PL PT RO SE SI SK TR**

(30) Priority: **27.10.2003 EP 03300179**

(43) Date of publication of application:
**26.07.2006 Bulletin 2006/30**

(73) Proprietor: **Koninklijke Philips Electronics N.V.**
**5621 BA Eindhoven (NL)**

(72) Inventor: **JUNG, Joel,**
**c/o Société Civile SPID**
**F-75008 PARIS (FR)**

(74) Representative: **Röggla, Harald et al**
**NXP Semiconductors**
**Intellectual Property Department**
**Gutheil-Schoder-Gasse 8-12**
**1101 Vienna (AT)**

(56) References cited:
- **TOURAPIS A M ET AL: "HIGHLY EFFICIENT PREDICTIVE ZONAL ALGORITHMS FOR FAST BLOCK-MATCHING MOTION ESTIMATION" IEEE TRANSACTIONS ON CIRCUITS AND SYSTEMS FOR VIDEO TECHNOLOGY, IEEE INC. NEW YORK, US, vol. 12, no. 10, October 2002 (2002-10), pages 934-947, XP001133425 ISSN: 1051-8215**
- **MIYAKOSHI J ET AL: "A Sub-mW MPEG-4 Motion Estimation Processor Core for Mobile Video Application" IEEE 2003 CUSTOM INTEGRATED CIRCUITS CONFERENCE, IEEE, 21 September 2003 (2003-09-21), pages 181-184, XP002310724 ISBN 0-7803-7842-3**
- **MOCCAGATTA I ET AL: "MPEG-4 VIDEO VERIFICATION MODEL: STATUS AND DIRECTIONS" INTERNATIONAL JOURNAL OF IMAGING SYSTEMS AND TECHNOLOGY, WILEY AND SONS, NEW YORK, US, vol. 8, no. 5, 1997, pages 468-479, XP001042079 ISSN: 0899-9457**
- **DE VLEESCHOUWER C ET AL: "Motion estimation for low power video devices" PROCEEDINGS 2001 INTERNATIONAL CONFERENCE ON IMAGE PROCESSING. ICIP 2001. THESSALONIKI, GREECE, OCT. 7 - 10, 2001, INTERNATIONAL CONFERENCE ON IMAGE PROCESSING, NEW YORK, NY : IEEE, US, vol. VOL. 1 OF 3. CONF. 8, 7 October 2001 (2001-10-07), pages 953-956, XP010563923 ISBN: 0-7803-6725-1 cited in the application**
- **JUNG J ET AL: "Power Scalable Video Encoder for Mobile Devices based on Collocated Motion Estimation" VISUAL COMMUNICATIONS AND IMAGE PROCESSING 2004, PROCEEDINGS OF THE SPIE, vol. 5308, 20 January 2004 (2004-01-20), pages 45-56, XP002310725**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

**FIELD OF THE INVENTION**

The present invention relates to a motion estimation method and device adapted to process a sequence of frames, a frame being divided into blocks of data samples.

The present invention relates to a predictive block-based encoding method comprising such a motion estimation method. It also relates to the corresponding encoder.

The present invention finally relates to a computer program product for implementing said motion estimation method.

This invention is particularly relevant for products embedding a digital video encoder such as, for example, home servers, digital video recorders, camcorders, and more particularly mobile phones or personal digital assistants, said apparatus comprising an embedded camera able to acquire and to encode video data before sending it.

**BACKGROUND OF THE INVENTION**

In a conventional video encoder, most of the memory transfers and, as a consequence, a large part of the power consumption, come from motion estimation. Motion estimation consists in searching for the best match between a current block and a set of several candidate reference blocks according to a rate distortion criterion, a difference between the current block and a candidate reference block forming a residual error block from which a distortion value is derived. However, such a motion estimation method is not optimal, especially in the case of a video encoder embedded in a portable apparatus having limited power.

Several authors have developed low-power methods. Some of them propose computational simplifications: such methods are not sufficient anymore. Others try to minimize memory accesses.

In the spatial domain, the paper entitled "A Low Power Video Encoder with Power, Memory and Bandwidth Scalability", by N. Chaddha and M. Vishwanath, 9th International Conference on VLSI Design, pp. 358-263, January 1996, proposes a technique based on hierarchical vector quantization which enables the ability for the encoder to change its power consumption depending on the available bandwidth and on the required video quality.

In the temporal domain, the paper entitled "Motion Estimation for Low-Power Devices", by C. De Vleeschouwer and T. Nilsson, ICIP2001, pp. 953-959, September 2001, proposes to simplify the conventional motion estimation but at the cost of a lower compression performance.

Disadvantages of these states of the art are that either the motion estimation method reduces the video quality too much, or that it does not achieve a sufficient memory transfer saving.

**SUMMARY OF THE INVENTION**

It is an object of the invention to propose an efficient way to reduce memory transfer, while keeping satisfying visual quality.

To this end, the motion estimation method in accordance with the invention is characterized in that it comprises a step of computing a residual error block associated with a motion vector candidate on the basis of a current block contained in a current frame and of a reference block contained in a reference frame, said reference block having a same position in the reference frame as the current block has in the current frame, the motion vector candidate defining a relative position of a virtual block containing a first reference portion of the reference block with reference to said reference block, the residual error block being computed from:

- a first difference between data samples of the first reference portion and corresponding data samples of a first current portion of the current block, and
- a second difference between a prediction of data samples of a second reference portion of the virtual block, which is complementary to the first reference portion, and data samples of a second current portion of the current block, which is complementary to the first current portion.

On the one hand, the motion estimation method in accordance with the invention uses only a restricted set of data samples, which is a reference block having a same position in the reference frame as the current block has in the current frame. Said reference block is also called the collocated block. Thanks to the use of said reduced set of data samples, the motion estimation method according to the invention is an efficient way to reduce memory transfer at the encoder and at the decoder. Moreover, reducing the energy dissipation of a corresponding video encoding circuit increases the reliability of said circuit and allows a significant attenuation of the cooling effort. Therefore production costs are greatly lowered.

On the other hand, said motion estimation method is adapted to determine a motion vector between the first reference portion of the reference block and the first current portion of the current block, i.e. by only taking into account portions of said current and reference blocks which are similar. Said motion vector can vary from (-N+1,-N+1) to (N-1,N-1) if the reference block comprises NxN data samples. In addition, the motion estimation method is adapted to predict missing data samples, i.e. the data samples that belong to the second reference portion of the virtual block. As we will see in further detail later on, this prediction can be done according to different modes. Thanks to the determination of a motion vector and to the prediction of corresponding missing data samples, the motion estimation method according to the invention is capable of keeping a satisfying visual quality.

These and other aspects of the invention will be apparent from and will be elucidated with reference to the embodiments described hereinafter.

## BRIEF DESCRIPTION OF THE DRAWINGS

The present invention will now be described in more detail, by way of example, with reference to the accompanying drawings, wherein:

- Fig. 1 is a block diagram of a conventional video encoder,
- Fig. 2 illustrates a conventional motion estimation method,
- Figs. 3A and 3B illustrate the motion estimation method in accordance with the invention,
- Fig. 4 corresponds to a first embodiment of said motion estimation method,
- Fig. 5 corresponds to a second embodiment of said motion estimation method, and
- Fig. 6 corresponds to a third embodiment of said motion estimation method.

## DETAILED DESCRIPTION OF THE INVENTION

The present invention relates to a method of motion estimation for use in a device adapted to process a sequence of frames, a frame being divided into blocks of data samples, for example pixels in the case of video data samples. Said device is, for example, an encoder adapted to encode said sequence of frames.

The present invention is more especially dedicated to the encoding of video frames. It can be used within MPEG-4 or H.264 video encoder, or any equivalent distortion-based video encoder. However, it will be apparent to a person skilled in the art that it is also applicable to the encoding of a sequence of audio frames or any other equivalent encoding.

It is to be noted that the present invention is not limited to encoding but can be applied to other types of processing, such as for example, image stabilization wherein an average of the different data blocks of a video frame is computed in order to determine a global motion of said frame. Such an image stabilization process can be implemented in a camcorder, in a television receiver, or in a video decoder after the decoding of an image.

The motion estimation method may be implemented in handheld devices, such as mobile phones or embedded cameras, which have limited power and which are adapted to encode sequences of video frames.

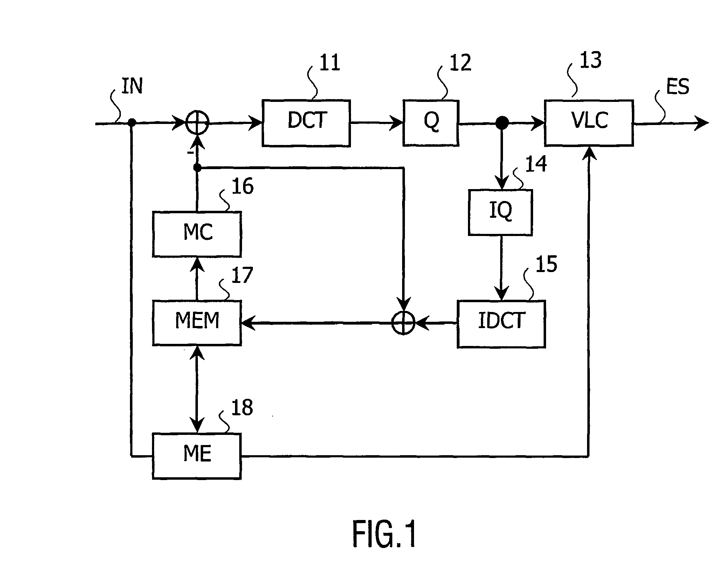

Fig. 1 depicts a conventional video encoder for encoding an input data block IN. Said encoder comprises:

- a subtractor for delivering a main residual error block,
- a discrete cosine transform DCT unit (11) and a quantizing Q unit (12) for transforming and quantizing successively the main residual error block,
- a variable length coding VLC unit (13) for delivering a variable length coded data block from the quantized data block,
- an inverse quantizing IQ unit (14) and inverse discrete cosine transform IDCT unit (15) for delivering an auxiliary residual error block from the quantized data block,
- a motion compensation MC unit (16) for delivering a motion compensated data block to an adder and to the subtractor using a motion vector, the subtractor being adapted to subtract the motion compensated data block from the input data block,
- an adder for summing the motion compensated data block and the auxiliary residual error block,
- a motion estimation ME unit (18) for finding, in a reference frame, a reference data block associated to the input data block, as well as its corresponding motion vector, and
- an external frame memory module MEM (17) to which the motion compensation and motion estimation units are coupled.

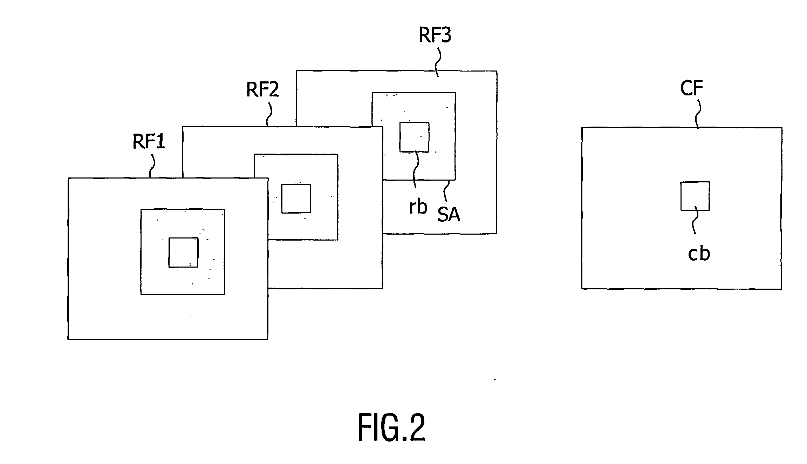

These conventional encoders are based on DCT transformation, scalar quantization, and motion estimation/compensation (ME/MC). The latter is clearly the most power consuming. When a block is encoded, the motion estimation unit ME looks for the best match for a current block cb in a current frame CF, among several blocks belonging to a search area SA in reference frames RF1 to RF3, as shown in Figure 2. This represents many accesses to pixels, and so to the memory. The larger the search area is, the larger the size of the memory and consequently the power dissipation.

The present invention proposes to replace the conventional motion estimation by a so-called collocated motion estimation', which is a restricted way of doing motion estimation, with a search area comprising a reduced set of pixels. In order to maintain a correct encoding efficiency while using less data, it is here proposed to modify the motion estimation process, and to mix it with a spatio-temporal prediction of missing pixels.

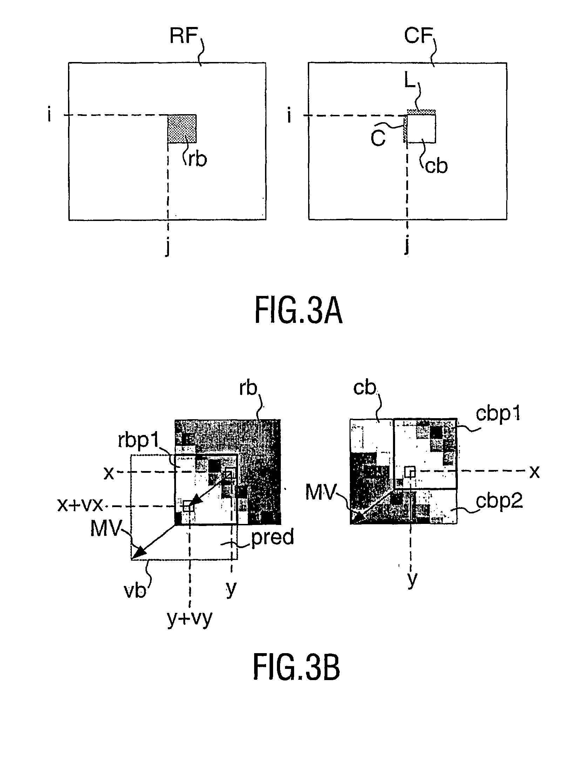

Figs. 3A and 3B illustrate the motion estimation method in accordance with the invention.

Said motion estimation method comprises a step of dividing a frame into blocks of pixels of equal size, for example ofNxN pixels, where N is an integer.

Then it comprises a step of computing a residual error block associated with a motion vector candidate MV on the basis of a current block cb contained in a current frame CF and of a reference block rb contained in a reference frame RF. According to the invention, the reference block has the same position (i,j) in the reference frame as the current block has in the current frame. In other words, the reference block is collocated to the current block. The motion vector candidate MV defines a relative position of a virtual block vb containing a first reference portion rbp 1 of the reference block rb with reference to said reference block.

The residual error block is then computed from:

- a first difference between data samples of the first reference portion rbp 1 and corresponding data samples of a first current portion cbp1 of the current block, the first current portion cpbl corresponding to a translation of the projection in the current frame of the first reference portion according to the motion vector candidate MV, and
- a second difference between a prediction of data samples of a second reference portion pred of the virtual block, which is complementary to the first reference portion, and data samples of a second current portion cbp2 of the current block, which is complementary to the first current portion.

In other words, let us note r(x,y) the residual error block value of a pixel of position (x,y) that will be encoded. The residual error block value is computed as follows:

$$r(x,y) = if(x+v_x, y+v_y) \in rb$$

$$rb(x+v_x, y+v_y) - cb(x,y)$$

else

pred(rb,cb(x,y)) where pred(rb,cb(x,y)) is a predictor that uses the reference block and the current block to be encoded, and where $(v_x, v_y)$ are the coordinates of the motion vector.

In general, values of pixels of the second reference portion pred are predicted from values of pixels of the reference block rb but this is not mandatory, as we will see later on.

Such a motion estimation method is called collocated motion estimation method. With said collocated motion estimation, the best match of the current block cb, i.e. the block to be encoded, is searched in the reference block rb. To this end, said motion estimation method is adapted to test different motion vector candidates MV between a first reference portion of the reference block and a first current portion of the current block, a predetermined motion vector candidate corresponding to portions of predetermined size. Said motion vector candidate can thus vary from a motion vector Mvmin of coordinates (-N+1, -N+1) to a motion vector Mvmax of coordinates (N-1, N-1) if the reference block comprises NxN pixels.

The step of computing a residual error block is repeated for a set of motion vector candidates. The motion estimation method in accordance with the invention further comprises a step of computing a distortion value for the motion vector candidates of the set on the basis of their associated residual error block values. The motion estimation method finally comprises a step of selecting the motion vector candidate having the smallest distortion value.

This process is called block matching and is based, for example, on the computing of the sum of absolute differences SAD according to a principle known to a person skilled in the art. The computing step is based, as other examples, on the computing of the mean absolute error MAE on the computing of the mean square error MSE. It will be apparent to a person skilled in the art that the distortion value can be computed using other equivalent calculations. For example, it can be based on a sum of an entropy h of the residual error block and on the mean square error MSE.

The residual error block and the selected motion vector are transmitted according to a conventional encoding scheme.

Except for the motion vector candidate (0,0), some pixels are always missing for the computation of the distortion value. Several ways of predicting the missing pixels can be used.

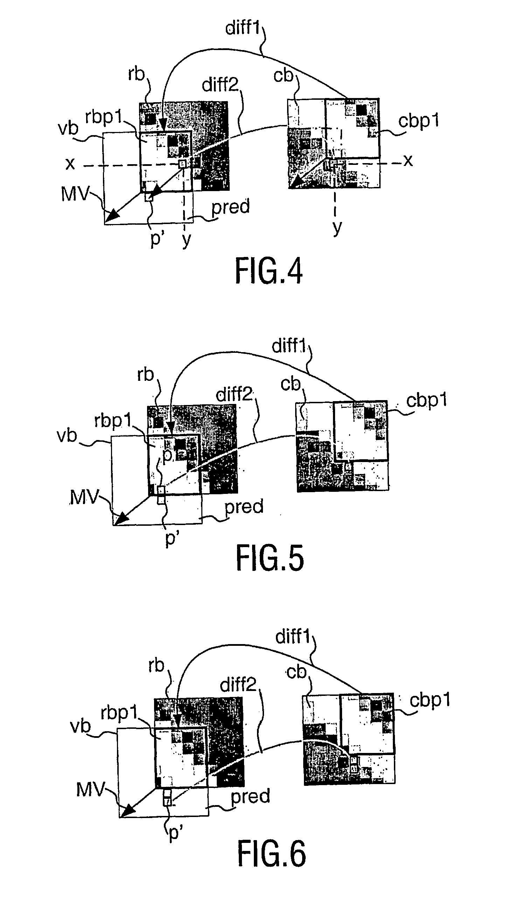

Fig. 4 illustrates a first embodiment of said motion estimation method called collocated prediction. In such an embodiment, a value of a pixel p' of the second reference portion pred is derived from a value of the pixel corresponding to a translation of the pixel of the second reference portion according to the opposite of the motion vector candidate MV. In other words, the missing pixel p' is predicted on the basis of the pixel rb(x,y) collocated to the current pixel cb(x,y) as follows:

$$\text{pred}(rb, cb(x, y)) = rb(x, y) - cb(x, y).$$

It is to be noted in Figs. 4 to 6 that the arrow diff1 represents the computation of the first difference between pixels of the first reference portion rbp1 and corresponding pixels of the first current portion cbp1 and that the arrow diff2 represents the computing of the second difference.

Fig. 5 illustrates a second embodiment of the motion estimation method called edge prediction. In such an embodiment, a value of a pixel of the second reference portion is predicted on the basis of a first interpolation of a pixel value of the reference block. Said prediction is defined as follows:

$$\text{pred}(rb, cb(x, y)) = rb(\text{proj}(x), \text{proj}(y)) - cb(x, y),$$

where the proj() function is adapted to determine the symmetric p" of the pixel p' of the second reference portion pred with reference to a horizontal and/or vertical edge of the reference block and to take the value of said symmetric pixel p" as the reference value rb(x",y"), as shown in Fig. 5.

Fig. 6 illustrates a third embodiment of said motion estimation method. It is called spatial interpolation prediction. In this embodiment, a value of a pixel of the second reference portion pred is derived from an interpolation of values of several pixels of the first reference portion. For example, the value of the pixel p' of the second reference portion is interpolated from the pixels belonging to the reference block rb that are on the same line or column as the pixel p'.

According to another embodiment of the invention, a single prediction value pred_value is derived from the reference block rb. The corresponding residual error block value is computed as follows:

$$r(x, y) = cb(x, y) - \text{pred\_value}$$

pred_value is set to the mean of the reference block rb values or the median of said values.

Still according to another embodiment of the invention, strictly spatial prediction is performed. In that case, the reference block is not used. The prediction value pred_value is an average or a median value of a line L of pixels on top of the current block or of a column C of pixels at the left of the current block as shown on Fig. 3A. As another option, the prediction value can be a constant value, 128 for example if pixel values are comprised between 0 and 255.

It will be apparent to a person skilled in the art that other methods can be proposed to determine the prediction value. For instance, it can be the most frequent value, i.e. the peak of an histogram of the reference block rb, or a value related to the line L, the column C and/or the reference block rb.

The drawings and their description hereinbefore illustrate rather than limit the invention. It will be evident to a person skilled in the art that there are numerous alternatives that fall within the scope of the appended claims.

For example the motion estimation method in accordance with the invention can be used either with only one prediction function, or with several prediction functions as above described, each prediction function being concurrent, as well as motion vectors are themselves concurrent, and selected via the distortion criterion.

The collocated motion search can be based on a three-dimensional recursive search 3DRS, or a Hierarchical Block Matching Algorithm HBMA algorithm. Sub-pixel refinement can be adopted in the same way. The motion is not restricted to a translation; it can support affine models for instance.

The proposed invention can be applied in any video encoding device were accesses to an external memory represent a bottleneck, either because of limited bandwidth or because of high power consumption. The latter reason is especially crucial in mobile devices, where extended battery lifetime is a key feature. It replaces the conventional motion estimation in any kind of encoder. It can be used, for example, in net-at-home, or transcoding applications.

The motion estimation method in accordance with the invention can be implemented by means of items of hardware or software, or both. Said hardware or software items can be implemented in several manners, such as by means of wired electronic circuits or by means of an integrated circuit that is suitable programmed, respectively. The integrated circuit can be contained in an encoder. The integrated circuit comprises a set of instructions. Thus, said set of instructions contained, for example, in an encoder memory may cause the encoder to carry out the different steps of the motion estimation method. The set of instructions may be loaded into the programming memory by reading a data carrier such as, for example, a disk. A service provider can also make the set of instructions available via a communication network such as, for example, the Internet.

Any reference sign in the following claims should not be construed as limiting the claim. It will be obvious that the use of the verb "to comprise" and its conjugations do not exclude the presence of any other steps or elements besides those defined in any claim. The word "a" or "an" preceding an element or step does not exclude the presence of a plurality of such elements or steps.

**Claims**

1. A method of motion estimation for use in a device adapted to process a sequence of frames, a frame being divided into blocks of data samples, said motion estimation method comprising a step of computing a residual error block associated with a motion vector candidate (MV) on the basis of a current block (cb) contained in a current frame (CF) and of a reference block (rb) contained in a reference frame (RF), said reference block having a same position in the reference frame as the current block has in the current frame, **characterized in that** : the motion vector candidate defines a relative position of a virtual block (vb) containing a first reference portion (rbp1) of the reference block with reference to said reference block, and the residual error block is computed from:

   - a first difference between data samples of the first reference portion and corresponding data samples of a first current portion (cbp1) of the current block, the first current portion (cpb1) corresponding to a translation of the projection in the current frame of the first reference portion according to the motion vector candidate (MV), and
   - a second difference between a prediction of data samples of a second reference portion (pred) of the virtual block, which is complementary to the first reference portion, and data samples of a second current portion (cbp2) of the current block, which is complementary to the first current portion.

2. A motion estimation method as claimed in claim 1, wherein data samples values of the second reference portion are predicted from data samples values of the reference block.

3. A motion estimation method as claimed in claim 2, wherein a data sample value of the second reference portion is derived from a data sample value of the reference block which is collocated to a current data sample of the current block.

4. A motion estimation method as claimed in claim 2, wherein a data sample value of the second reference portion is derived from an interpolation of at least one data sample value of the reference block.

5. A motion estimation method as claimed in claim 1, wherein the step of computing a residual error block is repeated for a set of motion vector candidates, the motion estimation method further comprising a step of computing a distortion value for the motion vector candidates of the set on the basis of their associated residual error block values.

6. A motion estimation method as claimed in claim 5, further comprising a step of selecting the motion vector candidate having the smallest distortion value.

7. A motion estimation method as claimed in claim 6, wherein the second difference is computing according to different prediction modes, which are concurrent for the selection of the motion vector candidate having the smallest distortion value.

8. A predictive block-based encoding method for encoding a sequence of frames, said encoding method comprising a motion estimation method as claimed in claim 1 for computing a motion vector to a desired accuracy, said encoding method further comprising a step of coding said motion vector and its associated residual error block.

9. A motion estimation device adapted to process a sequence of frames, a frame being divided into blocks of data samples, said device comprising means for computing a residual error block associated with a motion vector candidate (MV) on the basis of a current block (cb) contained in a current frame and of a reference block (rb) contained in a reference frame, said reference block having a same position in the reference frame as the current block has in the current frame, **characterized in that:** the motion vector candidate defines a relative position of a virtual block (vb) containing a portion (rbp1) of the reference block with reference to said reference block, and the computing means is configured such that the residual error block is computed from:

- a first difference between data samples of the first reference portion and corresponding data samples of a first current portion (cbp1) of the current block, the first current portion (cpb1) corresponding to a translation of the projection in the current frame of the first reference portion according to the motion vector candidate (MV), and
- a second difference between a prediction of data samples of a second reference portion (pred) of the virtual block, which is complementary to the first reference portion, and data samples of a second current portion (cbp2) of the current block, which is complementary to the first current portion.

10. An encoder for encoding a sequence of frames comprising a motion estimation device as claimed in claim 9 for computing a motion vector to a desired accuracy, and means for coding said motion vector and its associated residual error block.

11. A computer program product comprising program instructions for implementing, when said program is executed by a processor, a motion estimation method as claimed in claim 1.

**Patentansprüche**

1. Verfahren einer Bewegungsschätzung zur Benutzung in einem Gerät, das geeignet ist eine Abfolge von Bildfeldern zu verarbeiten, wobei ein Bildfeld in Blöcke von Abtastdaten aufgeteilt ist, wobei das Verfahren zur Bewegungsschätzung einen Schritt umfasst zum Berechnen eines Restfehlerblocks, zugehörig zu einem Bewegungsvektorkandidaten (MV), auf der Basis eines aktuellen Blocks (cb), der in einem aktuellen Bildfeld (CF) enthalten ist, und eines Referenzblocks (rb), der in einem Referenzbildfeld (RF) enthalten ist, wobei der Referenzblock eine gleiche Position in dem Referenzbildfeld aufweist wie der aktuelle Block in dem aktuellen Bildfeld aufweist, **dadurch gekennzeichnet, dass**:

der Bewegungsvektorkandidat eine relative Position eines virtuellen Blocks (vb), der einen ersten Referenzteilbereich (rbp1) des Referenzblocks enthält, in Bezug auf den Referenzblock definiert, und der Restfehlerblock berechnet wird aus:

- einer ersten Differenz zwischen Abtastdaten des ersten Referenzteilbereichs und entsprechenden Abtastdaten eines ersten aktuellen Teilbereichs (cbp1) des aktuellen Blocks, wobei der erste aktuelle Teilbereich (cpb1) einer Translation der Projektion in dem aktuellen Bildfeld des ersten Referenzteilbereichs gemäß dem Bewegungsvektorkandidaten (MV) entspricht, und
- einer zweiten Differenz zwischen einer Vorhersage von Abtastdaten eines zweiten Referenzteilbereichs (pred) des virtuellen Blocks, welcher ergänzend zu dem ersten Referenzteilbereich ist, und Abtastdaten eines zweiten aktuellen Teilbereichs (cbp2) des aktuellen Blocks, welcher zu dem ersten Teilbereich ergänzend ist.

2. Verfahren zur Bewegungsschätzung nach Anspruch 1, wobei Abtastdatenwerte des zweiten Referenzteilbereichs von Abtastdatenwerten des Referenzblocks vorhergesagt werden.

3. Verfahren zur Bewegungsschätzung nach Anspruch 2, wobei ein Abtastdatenwert des zweiten Referenzteilbereichs von einem Abtastdatenwert des Referenzblocks abgeleitet wird, der einem aktuellen Abtastdatenwert des aktuellen Blocks zugeordnet ist.

4. Verfahren zur Bewegungsschätzung nach Anspruch 2, wobei ein Abtastdatenwert des zweiten Referenzteilbereichs von einer Interpolation von mindestens einem Abtastdatenwert des Referenzblocks abgeleitet wird.

5. Verfahren zur Bewegungsschätzung nach Anspruch 1, wobei der Schritt des Berechnens eines Restfehlerblocks für eine Menge von Bewegungsvektorkandidaten wiederholt wird, wobei das Verfahren zur Bewegungsschätzung ferner einen Schritt zum Berechnen eines Distortion-Wertes für die Bewegungsvektorkandidaten der Menge auf der Basis von deren zugehörigen Restfehlerblockwerten umfasst.

**6.** Verfahren zur Bewegungsschätzung nach Anspruch 5, ferner umfassend einen Schritt des Auswählens des Bewegungsvektorkandidaten, der den kleinsten Distortion-Wert aufweist.

**7.** Verfahren zur Bewegungsschätzung nach Anspruch 6, wobei die zweite Differenz gemäß unterschiedlicher Vorhersagearten berechnet wird, die gleichlaufend für die Auswahl des Bewegungsvektorkandidaten sind, der den kleinsten Distortion-Wert aufweist.

**8.** Vorhersagendes Codierverfahren auf Blockbasis zum Codieren einer Abfolge von Bildfeldern, wobei das Codierverfahren ein Verfahren zur Bewegungsschätzung nach Anspruch 1 umfasst, um einen Bewegungsvektor in einer gewünschten Genauigkeit zu berechnen, wobei das Codierverfahren ferner einen Schritt des Codierens des Bewegungsvektors und seines zugehörigen Restfehlerblocks umfasst.

**9.** Gerät zur Bewegungsschätzung, das geeignet ist eine Abfolge von Bildfeldern zu verarbeiten, wobei ein Bildfeld in Blöcke von Abtastdaten aufgeteilt ist, wobei das Gerät Mittel umfasst, um einen Restfehlerblock, verbunden mit einem Bewegungsvektorkandidaten (MV), auf der Basis eines aktuellen Blocks (cb), der in einem aktuellen Bildfeld enthalten ist, und eines Referenzblocks (rb), der in einem Referenzbildfeld enthalten ist, zu berechnen, wobei der Referenzblock eine gleiche Position in dem Referenzbildfeld aufweist wie der aktuelle Block in dem aktuellen Bildfeld aufweist, **dadurch gekennzeichnet, dass** der Bewegungsvektorkandidat eine relative Position eines virtuellen Blocks (vb), der einen Teilbereich (rbp1) des Referenzblocks enthält, in Bezug auf den Referenzblock definiert, und das Berechnungsmittel derart gestaltet ist, dass der Restfehlerblock berechnet wird aus:

- einer ersten Differenz zwischen Abtastdaten des ersten Referenzteilbereichs und entsprechenden Abtastdaten eines ersten aktuellen Teilbereichs (cbp1) des aktuellen Blocks, wobei der erste aktuelle Teilbereich (cpb1) einer Translation der Projektion in dem aktuellen Bildfeld des ersten Referenzteilbereichs gemäß dem Bewegungsvektorkandidaten (MV) entspricht, und
- einer zweiten Differenz zwischen einer Vorhersage von Abtastdaten eines zweiten Referenzteilbereichs (pred) des virtuellen Blocks, welcher ergänzend zu dem ersten Referenzteilbereich ist, und Abtastdaten eines zweiten aktuellen Teilbereichs (cbp2) des aktuellen Blocks, welcher zu dem ersten Teilbereich ergänzend ist.

**10.** Codierer zum Codieren einer Abfolge von Bildfeldern, ein Gerät zur Bewegungsschätzung nach Anspruch 9 umfassend, um einen Bewegungsvektor in einer gewünschten Genauigkeit zu berechnen, sowie Mittel zum Codieren des Bewegungsvektors und seines zugehörigen Restfehlerblocks.

**11.** Computerprogrammprodukt, Programmanweisungen zur Anwendung, wenn das Programm durch einen Prozessor ausgeführt wird, und ein Verfahren zur Bewegungsschätzung nach Anspruch 1 umfassend

**Revendications**

**1.** Procédé d'estimation de mouvement destiné à une utilisation dans un dispositif adapté pour traiter une séquence de trames, une trame étant divisée en blocs d'échantillons de données, ledit procédé d'estimation de mouvement comprenant une étape consistant à calculer un bloc d'erreur résiduelle associé à un candidat vecteur de mouvement (MV) sur la base d'un bloc courant (cb) contenu dans une trame courante (CF) et d'un bloc de référence (rb) contenu dans une trame de référence (RF), ledit bloc de référence ayant une même position dans la trame de référence, que celle du bloc courant dans la trame courante, **caractérisé en ce que** le candidat vecteur de mouvement définit une position relative d'un bloc virtuel (vb) contenant une première partie de référence (rbp1) du bloc de référence en référence audit bloc de référence, et le bloc d'erreur résiduelle est calculé à partir :

d'une première différence entre des échantillons de données de la première partie de référence et des échantillons de données correspondants d'une première partie courante (cbp1) du bloc courant, la première partie courante (cpb1) correspondant à une translation de la projection dans la trame courante de la première partie de référence selon le candidat vecteur de mouvement (MV), et
une seconde différence entre une prédiction d'échantillons de données d'une seconde partie de référence (pred) du bloc virtuel, qui est complémentaire de la première partie de référence, et d'échantillons de données d'une seconde partie courante (cbp2) du bloc courant, qui est complémentaire de la première partie courante.

**2.** Procédé d'estimation de mouvement, tel que revendiqué dans la revendication 1, dans lequel des valeurs d'échantillons de données de la seconde partie de référence sont prédites à partir de valeurs d'échantillons de données du bloc de référence.

3. Procédé d'estimation de mouvement, tel que revendiqué dans la revendication 2, dans lequel une valeur d'échantillon de données de la seconde partie de référence est dérivée d'une valeur d'échantillon de données du bloc de référence qui est contiguë à un échantillon de données courant du bloc courant.

4. Procédé d'estimation de mouvement, tel que revendiqué dans la revendication 2, dans lequel une valeur d'échantillon de données de la seconde partie de référence est dérivée d'une interpolation d'au moins une valeur d'échantillon de données du bloc de référence.

5. Procédé d'estimation de mouvement, tel que revendiqué dans la revendication 1, dans lequel l'étape de calcul d'un bloc d'erreur résiduelle est répétée pour un jeu de candidats vecteurs de mouvement, le procédé d'estimation d'erreur de mouvement comprenant en outre une étape consistant à calculer une valeur de distorsion pour les candidats vecteurs de mouvement du jeu sur la base de leurs valeurs de bloc d'erreur résiduelle associé.

6. Procédé d'estimation de mouvement, tel que revendiqué dans la revendication 5, comprenant en outre une étape consistant à sélectionner le candidat vecteur de mouvement ayant la plus petite valeur de distorsion.

7. Procédé d'estimation de mouvement, tel que revendiqué dans la revendication 6, dans lequel la seconde différence est calculée suivant différents modes de prédiction, lesquels sont concurrents pour la sélection du candidat vecteur de mouvement ayant la plus petite valeur de distorsion.

8. Procédé de codage prédictif basé sur des blocs pour coder une séquence de trames, ledit procédé de codage comprenant un procédé d'estimation de mouvement, tel que revendiqué dans la revendication 1, pour calculer un vecteur de mouvement avec une précision souhaitée, ledit procédé de codage comprenant en outre une étape consistant à coder ledit vecteur de mouvement et son bloc d'erreur résiduelle associé.

9. Dispositif d'estimation de mouvement adapté pour traiter une séquence de trames, une trame étant divisée en blocs d'échantillons de données, ledit dispositif comprenant un moyen pour calculer un bloc d'erreur résiduelle associé à un candidat vecteur de mouvement (MV) sur la base d'un bloc courant (cb) contenu dans une trame courante (CF) et d'un bloc de référence (rb) contenu dans une trame de référence, ledit bloc de référence ayant une même position dans la trame de référence que celle du bloc courant dans la trame courante, **caractérisé en ce que** le candidat vecteur de mouvement définit une position relative d'un bloc virtuel (vb) contenant une partie (rbp1) du bloc de référence en référence audit bloc de référence, et le moyen de calcul est configuré de telle sorte que le bloc d'erreur résiduelle est calculé à partir:

d'une première différence entre des échantillons de données de la première partie de référence et des échantillons de données correspondants d'une première partie courante (cbp1) du bloc courant, la première partie courante (cpb1) correspondant à une translation de la projection dans la trame courante de la première partie de référence selon le candidat vecteur de mouvement (MV), et
une seconde différence entre une prédiction d'échantillons de données d'une seconde partie de référence (pred) du bloc virtuel, qui est complémentaire de la première partie de référence, et d'échantillons de données d'une seconde partie courante (cbp2) du bloc courant, qui est complémentaire de la première partie courante.

10. Codeur pour coder une séquence de trames comprenant un dispositif d'estimation de mouvement, tel que revendiqué dans la revendication 9, pour calculer un vecteur de mouvement avec une précision souhaitée, et un moyen pour coder ledit vecteur de mouvement et son bloc d'erreur résiduelle associé.

11. Produit programme d'ordinateur comprenant des instructions de programme pour implémenter, lorsque ledit programme est exécuté par un processeur, un procédé d'estimation de mouvement, tel que revendiqué dans la revendication 1.

FIG.1

FIG.2

RF

CF

i ----

rb

i ----

L

C

cb

j

j

## FIG.3A

rb

cb

rbp1

cbp1

x ----

x ----

x+vx ----

MV

MV

vb

pred

cbp2

y

y

y+vy

## FIG.3B

FIG.4

FIG.5

FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N. CHADDHA ; M. VISHWANATH.** A Low Power Video Encoder with Power, Memory and Bandwidth Scalability. *9th International Conference on VLSI Design,* January 1996, 358-263

- **C. DE VLEESCHOUWER ; T. NILSSON.** Motion Estimation for Low-Power Devices. *ICIP2001,* September 2001, 953-959